# EUROPÄISCHE PATENTANMELDUNG

(11) **EP 1 643 816 A2**
(43) Veröffentlichungstag der Anmeldung: **05.04.2006**
(21) Anmeldenummer: 05018821.8
(22) Anmeldetag: 30.08.2005
(51) Int. Cl.: H05B 41/24, H05B 41/28

(54) **Wandlerschaltung mit Klasse-E-Konvertermodulen**

(30) Priorität: 29.09.2004 DE 102004047372
(71) Anmelder: Patent-Treuhand-Gesellschaft für elektrische Glühlampen mbH, 81543 München (DE)
(72) Erfinder: Lecheler, Reinhard, 86633 Neuburg/Donau (DE); Sowa, Wolfram, Dr., 81739 München (DE)

(57) **Zusammenfassung**

Die Erfindung bezieht sich auf eine Wandlerschaltung mit einer Serienschaltung von Klasse-E-Konvertermodulen zur Optimierung der Gleichspannungsversorgung des einzelnen Konvertermoduls (z. B. C7, C11, Z1, S1, L1, L2).

## Beschreibung

### Technisches Gebiet

Die vorliegende Erfindung bezieht sich auf eine Wandlerschaltung, insbesondere auf ein elektronisches Vorschaltgerät mit dieser Wandlerschaltung, auf entsprechende Betriebsverfahren und, im Rahmen bevorzugter Anwendungsfälle, auf ein Lampensystem und die Verwendung eines solchen Lampensystems.

### Stand der Technik

Wandlerschaltungen zur Erzeugung einer Wechselspannungsleistung aus einer gleichgerichteten Netzversorgung oder einer Gleichspannungsversorgung sind an sich in verschiedenen Bauformen bekannt. Insbesondere sind sog. Klasse-E-Konverter bzw. Sperrwandler bekannt.

In Klasse-E-Konvertern werden Speicherinduktivitäten durch einen Anschluss an eine Spannungsversorgung aufgeladen. Bei einem bestimmten Stromwert wird der Stromfluss durch einen seriell zu der Speicherinduktivität liegenden Schalttransistor unterbrochen und der dadurch entstehende Induktionsspannungspuls zur Versorgung einer Last genutzt.

Es ist insbesondere bekannt, solche Klasse-E-Konverter zur Versorgung von dielektrisch behinderten Entladungslampen mit einer gepulsten Hochfrequenzversorgungsspannung einzusetzen. Es wird verwiesen auf die EP 0 927 506 B1, die sowohl das Arbeitsprinzip eines Klasse-E-Konverters als auch diesen Anwendungsfall illustriert.

Es ist weiterhin bekannt, zur Gewährleistung einer möglichst sinusförmigen Stromaufnahme aus einem Versorgungsnetz, d. h. zur Verbesserung des Leistungsfaktors, Leistungsfaktorkorrekturschaltungen einzusetzen. Unter anderem kommen hier sog. Hochsetzsteller in Betracht, die z. B. beschrieben werden in: C. H. Sturm, E. Klein: "Betriebsgeräte und Schaltungen für elektrische Lampen", 6. Auflage, 1992, Siemens AG, S. 127.

Der Hochsetzsteller hat den Vorteil, in Aufbau und Betrieb besonders einfach zu sein.

### Darstellung der Erfindung

Der Erfindung liegt das technische Problem zugrunde, eine Wandlerschaltung anzugeben, die sich gut zur Verwendung an einer vorgeschalteten Leistungsfaktorkorrekturschaltung eignet.

Die Erfindung bezieht sich auf eine Wandlerschaltung mit einer Mehrzahl Klasse-E-Konvertermodule, deren Schalttransistoren und Speicherinduktivitäten insgesamt in Serie geschaltet sind und deren Schalttransistoren über eine gemeinsame Steuerleitung ansteuerbar sind.

Weiterhin bezieht sich die Erfindung auf ein entsprechendes Vorschaltgerät, insbesondere eines mit einer Leistungsfaktorkorrekturschaltung, bei dem die Wandlerschaltung mit der unverminderten Ausgangsspannung der Leistungsfaktorkorrekturschaltung betreibbar ist.

Daneben richtet sich die Erfindung auch auf entsprechende Betriebsverfahren nach Anspruch 12 und 13, auf ein Lampensystem nach Anspruch 14 und, im Rahmen bevorzugter Anwendungsfälle, auf Verwendungen des Lampensystems nach Anspruch 15 und eine Anzeigevorrichtung nach Anspruch 16.

Bevorzugte Ausgestaltungen der Erfindung sind ferner in den abhängigen Ansprüchen angegeben und werden im Folgenden näher erläutert. Die einzelnen Merkmale beziehen sich dabei stets sowohl auf die Vorrichtungskategorie als auch die Verfahrenskategorie der Erfindung und auf die vorstehend aufgezählten verschiedenen Aspekte der Erfindung.

Die Grundidee der Erfindung besteht darin, einen Klasse-E-Konverter nicht als eigene Wandlerschaltung, sondern als Modul einer Wandlerschaltung aufzufassen. Erfindungsgemäß werden solche Klasse-E-Konvertermodule in der Form seriell geschaltet, dass ihre ohnehin innerhalb der Module seriell geschalteten Speicherinduktivitäten und Schalttransistoren insgesamt eine Serienschaltung bilden. Die Schalttransistoren der einzelnen Klasse-E-Konvertermodule werden über ein gemeinsames Steuersignal angesteuert, so dass die einzelnen Module synchronisiert und zumindest im Wesentlichen phasengleich arbeiten können. Die zum Ein- und Ausschalten des Stroms der Speicherinduktivitäten verwendeten Schalttransistoren werden also synchron geschaltet, was durch eine signaltechnische Kopplung der die einzelnen Schalttransistoren ansteuernden Steuerleitungen im Sinne einer gemeinsamen Steuersignals erfolgt.

Dies hat den Vorteil, dass sich die Serienschaltung der Module sozusagen als Spannungsteilerschalter nutzten lässt, die Versorgungsgleichspannung auf die einzelnen Module aufteilt und damit an den einzelnen Modulen eine verringerte Versorgungsgleichspannung anliegt. Insbesondere addieren sich die Gleichspannungspegel der einzelnen Module, was anhand der Ausführungsbeispiele näher erläutert wird.

Somit erhält man einen weiteren Freiheitsgrad, eine relativ große Versorgungsgleichspannung verwenden zu können, ohne den einzelnen Klasse-E-Konverter daran anpassen zu müssen. Dies betrifft sowohl die Belastbarkeit der Schaltungstransistoren als auch anderer Bauteile, vor allem aber auch die Auslegung des Transformators am Ausgang des Wandlers.

Man kann vielmehr mit der Erfindung einerseits relativ hohe Versorgungsgleichspannungen verwenden, andererseits die Wandlertopologie modulintern unabhängig davon optimieren, vor allem im Hinblick auf die Effizienz. Daraufhin kann dann bestimmt werden, mit wie vielen seriell geschalteten Modulen die Anforderungen insgesamt erfüllt werden können.

Ein wesentlicher Aspekt der Erfindung liegt darin, dass häufig Leistungsfaktorkorrekturschaltungen eingesetzt werden sollen, bei denen die Wahl der Ausgangsspannung nicht immer frei steht. Beispielsweise sind die eingangs bereits erwähnten Hochsetzsteller nicht in der Lage, Ausgangsspannungen unter dem Scheitelwert der Netzspannung zu erzeugen, aus anderen Gründen jedoch günstig. Beispielsweise wurde bereits am Ausgang eines solchen Hochsetzstellers ein weiterer Tiefsetzsteller verwendet, um die eigentlich bereits bestehende Versorgungsgleichspannung auf ein für den Wandler günstiges Spannungsniveau zu bringen. Dieser Aufwand entfällt mit dieser Erfindung. Vielmehr kann die erfindungsgemäße Wandlerschaltung direkt am Ausgang eines Hochsetzstellers verwendet werden, wobei direkt bedeutet, dass keine Spannungspegelanpassung erfolgen muss.

Die erwähnte signaltechnische Kopplung der einzelnen Steuerleitungen der Schalttransistoren in den Modulen erfolgt bevorzugt über Kondensatoren. Die Gleichspannungstrennung der Kondensatoren hat den Vorteil, dass die unterschiedlichen Potentialniveaus der Module nicht stören, also eine gemeinsame Treiberschaltung verwendet werden kann anstelle einzelner, auf die jeweiligen Potentiale angepasster Treiberschaltungen.

Ferner ist es bevorzugt, innerhalb jedes Moduls eine Zenerdiode zu verwenden, die im Prinzip zwischen dem Steueranschluss und dem Bezugspotentialanschluss des Schalttransistors liegt, im Falle eines FETs in Common-Source-Schaltung also zwischen dem Gate-Anschluss und dem Source-Anschluss. Der Begriff Bezugspotentialanschluss ist hier im Rahmen der Serienschaltung zu verstehen, kann also ein um die Gleichspannungsbeträge der "darunter" liegenden Module erhöhtes Bezugspotential meinen. Es geht sozusagen um das Bezugspotential aus der Sicht des einzelnen Moduls. Diese Zenerdiode begrenzt den Spannungspegel an dem Steueranschluss und dient in Verbindung mit den erwähnten Koppelkondensatoren der Steuerleitungen zur Justierung von deren Gleichspannungspegel. Sie können ferner bei geeigneter Auslegung durch Kurzschließen über ihrer Durchlassspannung liegender Anteile eine effektive "Filterwirkung" zur Ausfilterung von Störanteilen in dem Steuersignal haben. Damit ist keine Filterwirkung im Sinne eines Tiefpasses gemeint. Vielmehr werden die Hochfrequenzanteile dann kurzgeschlossen, wenn ihre Amplituden in dem Signalanteil liegen, der über der Durchlassspannung der Zenerdiode liegt. Das "Abschneiden" der Anteile über der Durchlassspannung betrifft dann auch die Hochfrequenzanteile. Die Gate-Ansteuerung wird somit unabhängiger von Versorgungsspannungsmodulationen und Steuersignalstörungen.

Ein Klasse-E-Konverter weist regelmäßig einen versorgungsseitigen Kondensator zur Stabilisierung der Versorgungsspannung auf, normalerweise einen Elektrolytkondensator. Bei einer Ausführungsform der Erfindung ist vorgesehen, dass jedes Modul einen eigenen solchen Versorgungskondensator aufweist. Bei einer anderen Ausführungsform der Erfindung werden diese Versorgungskondensatoren jedoch durch einen einzigen, für die gesamte Serienschaltung vorgesehenen Kondensator ersetzt. Bei einer dritten Ausführungsform liegen beide Fälle gemischt vor, wobei die modulinternen Versorgungskondensatoren entsprechend kleiner und eventuell auch als einfache Folienkondensatoren ausgeführt sein können. Zur Illustration wird auf die Ausführungsbeispiele verwiesen.

Ferner sind vorzugsweise auch parallel zu den Schaltstrecken der jeweiligen Schalttransistoren in den Modulen Kondensatoren vorgesehen, die zur Spannungsformung dienen.

Eine weitere Ausgestaltung der Erfindung sieht einen kapazitiven Kurzschluss der Abgriffe jedes Moduls zwischen dem jeweiligen Schalttransistor und der jeweiligen Speicherinduktivität vor. Dies erlaubt eine Symmetrisierung der Wechselspannungssignale an den jeweiligen Modulen durch einen Hochfrequenzkurzschluss. Damit werden Probleme infolge der Sekundärspannungsverteilung und von Einflüssen über kapazitive Kopplungen vermieden. Die Primärspannungen an den Schaltern und Speicherinduktivitäten müssen nämlich nicht notwendigerweise gleich sein. Vielmehr kommt es in Folge kapazitiver Kopplungen zwischen den Primärwicklungen und Sekundärwicklungen und durch Einflüsse der sekundärseitigen Verschaltung zu Asymmetrien. Der erwähnte Hochfrequenzkurzschluss beseitigt solche Asymmetrien.

Vorzugsweise weist der Ausgang der jeweiligen Module einen Transformator auf, wobei die Sekundärwicklungen der Transformatoren nicht notwendigerweise seriell verschaltet sein müssen, es jedoch vorzugsweise sind, wie in den Ausführungsbeispielen dargestellt.

Bevorzugte Anwendungsbereiche der Erfindung liegen im Betrieb von dielektrisch behinderten Entladungslampen, d. h. im Einsatz der Wandlerschaltung in einem elektronischen Vorschaltgerät für solche Lampen. Weiterhin können solche Lampensysteme beispielsweise bei der Hinterleuchtung von Monitoren für Computer oder Fernsehgeräten oder in anderen Anzeigevorrichtungen Verwendung finden. Wichtig sind auch UV-Strahler, d. h. Lampen, bei denen die originäre UV-Strahlung aus der Entladung genutzt wird und kein Leuchtstoff Verwendung findet oder mittels eines geeigneten Leuchtstoffs in UV-Strahlung größerer Wellenlängen konvertiert wird. Solche UV-Strahler finden für verschiedene technische Aufgaben Anwendung, insbesondere zur Materialbehandlung, Oberflächenmodifikation, zur Wasserreinigung und Sterilisation.

### Kurze Beschreibung der Zeichnungen

Die Erfindung wird im Folgenden anhand der Ausführungsbeispiele näher erläutert, wobei die Merkmale, wie bereits ausgeführt, im Hinblick auf die verschiedenen Kategorien und Aspekte der Erfindung zu verstehen sind und im Übrigen auch in anderen Kombinationen erfindungswesentlich sein können.
- Figur 1: zeigt ein einfaches schematisiertes Beispiel einer erfindungsgemäßen Wandlerschaltung als erstes Ausführungsbeispiel.
- Figur 2: zeigt ein zweites Ausführungsbeispiel einer Wandlerschaltung mit einigen zusätzlichen Merkmalen gegenüber der Schaltung aus Figur 1.
- Figur 3: zeigt ein drittes Ausführungsbeispiel einer Wandlerschaltung.
- Figur 4: zeigt ein viertes Ausführungsbeispiel einer Wandlerschaltung.

### Bevorzugte Ausführung der Erfindung

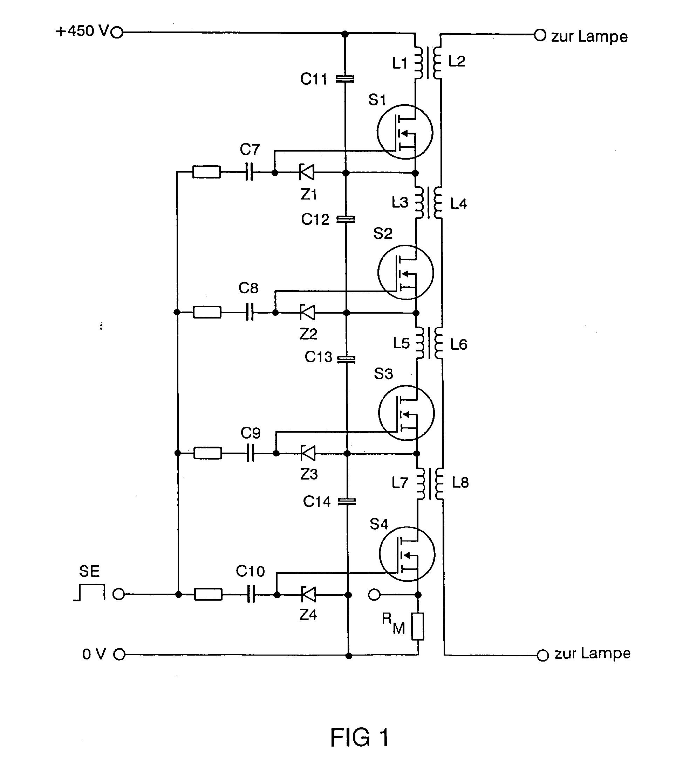

Figur 1 zeigt eine Serienschaltung von vier Klasse-E-Konvertermodulen in einem Vorschaltgerät zur Versorgung einer dielektrisch behinderten Entladungslampe. Ein erstes und in Figur 1 oben eingezeichnetes sowie potentialmäßig hochliegendes Modul weist einen Schalttransistor S1, hier ein Leistungs-MOSFET, eine Speicherinduktivität L1 mit Sekundärwicklung L2, einen Versorgungselektrolytkondensator 11, einen Ansteuerkopplungskondensator C7 und eine Zenerdiode Z1 auf. Die Speicherinduktivität L1 und der Schalttransistor S1 sind in Serie geschaltet, wobei der Source-Anschluss des Schalttransistors S1 unten auf dem modulinternen Bezugspotential liegt, das das positive Versorgungspotential des darunter liegenden Moduls (S2, L3, L4, C12, C8, Z2) bildet.

Der Drain-Anschluss des Schalttransistors S1 ist mit dem unteren Anschluss der Speicherinduktivität L1 gekoppelt, deren oberer Anschluss an einer Zwischenkreisgleichspannung von etwa 450V liegt. Diese Zwischenkreisversorgungsspannung wird in einer hier nicht im einzelnen dargestellten und an sich konventionellen Weise durch Gleichrichtung und Wandlung mit einem Hochsetzsteller aus einer Netzversorgungsspannung erzeugt.

Parallel zu der Serienschaltung aus der Speicherinduktivität L1 und dem Schalttransistor S1 liegt der Versorgungskondensator C11, der zur Stützung der Versorgungsspannung dient und deswegen als relativ großer Elektrolytkondensator ausgeführt ist.

Ein zentrales Steuersignal SE wird in Figur 1 links unten eingespeist und ist hier symbolisch als Rechteckwellenform dargestellt. Dieses wird über nichtbezifferte Widerstände und Ansteuerkoppelkondensatoren C7-C10, im Falle des oberen Moduls C7, an die Gates der Schalttransistoren gelegt. Die Steuersignaleinkopplung ist also eine rein wechselspannungsmäßige. Zwischen den Gate-Anschluss des Schalttransistors S1 und den Source-Anschluss ist eine Zenerdiode Z1 geschaltet, die das Gleichspannungsniveau des Koppelkondensators C7 justiert und Überspannungen am Gate-Anschluss verhindert. Durch geschickte Einstellung des eingekoppelten Ansteuersignalpegels kann zudem erreicht werden, dass im Falle eines Öffnens des Schalttransistors S1 das Ansteuersignal etwas über der Durchlassspannung der Zenerdiode Z1 liegt und damit eine dem Ansteuersignal überlagerte Störung in der Zenerdiode Z1 kurzgeschlossen wird. Für diese Kurzschlusssituation sind die Widerstände in der gemeinsamen Ansteuerleitung, also beispielsweise der Widerstand links des Koppelkondensators C7, vorgesehen.

Unterhalb des beschriebenen ersten Moduls befindet sich ein baugleiches zweites Modul mit den entsprechend höher bezifferten Bauteilen, wobei das interne (untere) Bezugspotential des ersten Moduls das positive Versorgungspotential des zweiten Moduls bildet. Entsprechende Verhältnisse gelten für das zweite und dritte Modul und für das dritte und vierte Modul. Das interne Bezugspotential des vierten Moduls liegt, wie Figur 1 zeigt, auf Masse und ist im Fall des Source-Anschlusses des vierten Schalttransistors S4 über einen Strommesswiderstand R_{M} an Masse gekoppelt.

Die Versorgungsspannung von 450V verteilt sich wie bei einer Spannungsteilerschaltung auf die vier Versorgungskondensatoren C11-C14, so dass jeder der Kondensatoren auf etwa 112,5V aufgeladen ist. Dies wird als günstiger Wert angesehen, weil Gleichspannungen im Bereich zwischen 40V und 120V typischerweise für den Betrieb von Klasse-E-Konvertern für den Betrieb von dielektrisch behinderten Entladungslampen günstig sind. Die einzelne Modulversorgungsspannung könnte durch entsprechend höhere Modulzahl auch verringert werden.

Zunächst bestand eine gewisse Befürchtung, dass Materialtoleranzen, insbesondere unterschiedliche Kapazitäten der Elektrolytkondensatoren C11-C14 und/oder unterschiedliche Induktivitäten, zu deutlich unterschiedlichen Versorgungsspannungen der einzelnen Module bis hin zu einer Zerstörung der Komponenten führen würden. Jedoch hat sich gezeigt, dass die auftretenden Schwankungen relativ gering und beherrschbar sind und sich die Schaltung stabil verhält. Im Wesentlichen liegt dies daran, dass bei einer Erhöhung einer einzelnen Modulversorgungsspannung die von diesem Modul konvertierte Pulsenergie ansteigt und damit der entsprechende Versorgungskondensator stärker entladen wird.

Bei der in Figur 1 dargestellten Schaltung summieren sich übrigens nicht die Drain-Source-Spannungen der einzelnen Schalttransistoren S1-S4 auf. Vielmehr addiert sich die einzelne Drain-Source-Spannung zu dem jeweils "darunter" liegenden Gleichspannungsniveau gegenüber dem Schaltungsbezugspunkt, also beispielsweise die Drain-Source-Spannung des Schalttransistors S2 zu den 225V am oberen Anschluss des Kondensators C13. Es handelt sich hier also nicht um eine Serienschaltung einzelner Schalttransistoren, wie man sie beispielsweise zur Erhöhung der Gesamtsperrspannung kennt.

Neben der Spannungsstabilisierung haben die Versorgungskondensatoren C11-C14 überdies den Sinn, aus dem Sekundärkreis in den Primärkreis des einzelnen Klasse-E-Konvertermoduls zurückgespeiste Energie aufzunehmen. Es wird auf die bereits zitierte EP 0 927 506 B1 verwiesen. Im Übrigen ist dem Fachmann die Funktionsweise von Klasse-E-Konvertern bekannt.

Die Speicherinduktivitäten sind bei diesem Ausführungsbeispiel mit Sekundärwicklungen L2, L4, L6 und L8 gekoppelt, die wiederum eine Serienschaltung bilden. Durch die gemäß Figur 1 zeitlich synchronisierte Ansteuerung der Schalttransistoren S1-S4 addieren sich somit auch Induktionsspannungen auf der Sekundärseite.

Die sekundärseitigen Induktivitäten L2, L4, L6 und L8 könnten natürlich auch anders verschaltet sein, beispielsweise parallel geschaltet sein. Dies ist eine Frage der Impedanzanpassung an die zu versorgende dielektrisch behinderte Entladungslampe. Im vorliegenden Fall ist eine Serienschaltung günstig, weil relativ hohe Spannungen erzeugt werden sollen. Die serielle Ausgangsschaltung ist vor allem deswegen bevorzugt, weil wegen der Exemplarstreuungen bei Parallelschaltungen Ausgleichsströme fließen können, die im Hinblick auf die elektromagnetische Verträglichkeit und die. Verluste nachteilig sind (sog. Klingeln). In jedem Fall addieren sich die Leistungen der einzelnen Module zu einer Gesamtleistung.

Die Erfindung hat dabei auch den weiteren Vorteil, dass bei größeren geforderten Eingangsleistungen der zu versorgenden Lampe durch die Verteilung auf mehrere Module, insbesondere die Verteilung auf mehrere Induktivitäten bzw. Transformatoren, günstigere Baugrößen, insbesondere Bauhöhen, erzielt werden können. Häufig sind mehrere kleine Transformatoren baulich günstiger als ein größerer.

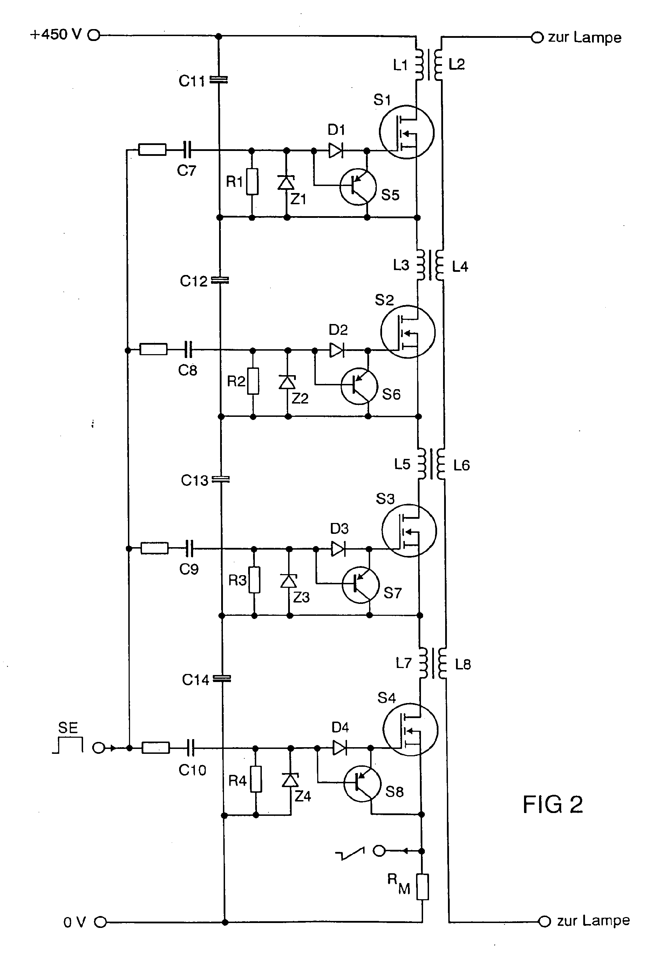

Figur 2 zeigt eine Variante zur Figur 1.

Figur 2 zeigt weitgehend analoge Strukturen zur Figur 1, wobei für entsprechende Bauteile auch die gleichen Bezugszeichen verwendet worden sind. Zusätzlich enthält jedes Modul zwischen dem oberen Anschluss der Zenerdiode und dem Gate-Anschluss des Schalttransistors jeweils eine mit ihrer Anode an die Kathode der Zenerdiode geschaltete Gleichrichterdiode und einen Bipolartransistor, dessen Emitter zwischen dieser Gleichrichterdiode und dem Gate-Anschluss, dessen Basis zwischen der Gleichrichterdiode und der Zenerdiode und dessen Kollektor an den Source-Anschluss des jeweiligen Schalttransistors geschaltet ist. Die Gleichrichterdioden sind mit D1-D4 bezeichnet, wohingegen die Bipolartransistoren mit S5-S8 bezeichnet sind. Diese Verschaltung sorgt dafür, dass die Schalttransistoren S1-S4 besonders schnell abgeschaltet werden können, indem das Potential am Gate-Anschluss besonders schnell über die Emitter-Kollektor-Strecke des jeweiligen Bipolartransistors S1-S8 unter den Gate-Spannungs-Schwellenwert geführt wird. Die Dioden D1-D4 sorgen dafür, dass die Schalttransistoren S1-S4 über die Bipolartransistoren S5-S8 ausgeschaltet und über die Dioden D1-D4 eingeschaltet werden können.

Ferner sorgen die mit R1-R4 bezeichneten Widerstände parallel zu den Zenerdioden dafür, dass sich die gesamte Serienschaltung der Klasse-E-Konvertermodule ohne Ansteuersignal SE selbstständig abschaltet.

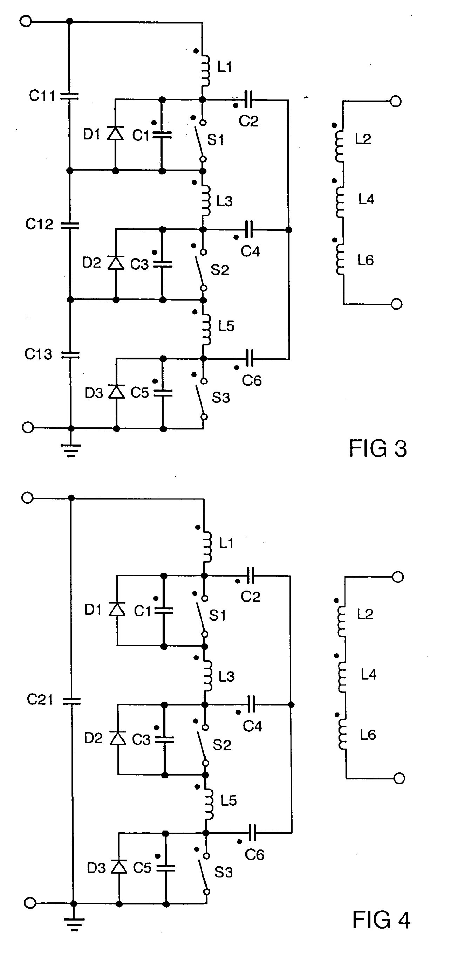

Figur 3 zeigt ein drittes Ausführungsbeispiel, dass sich von den beiden vorherigen Ausführungsbeispielen zunächst dadurch unterscheidet, dass nur drei Module verwendet wurden. Ferner sind hier die Primär- und Sekundärwicklungen der Transformatoren L1 und L2, L3 und L4, L5 und L6 getrennt voneinander gezeichnet, was nur der zeichnerischen Übersichtlichkeit dienen soll und keine technische Änderungen gegenüber den Figuren 1 und 2 bedeutet. Schließlich ist hier die Ansteuerung der Schalttransistoren S1-S3 weggelassen, die entsprechend Figur 2 erfolgt.

Zum einen sind zusätzliche Kondensatoren C1, C3 und C5 jeweils parallel zu den Schalttransistoren S1, S2 und S3 vorgesehen, die der Signalformung über den Transistoren dienen. Die dazu parallel eingezeichneten Gleichrichterdioden D1-D3 stellen die intrinsischen Bodydioden der Schalttransistoren S1-S3 dar. Wenn keine MOSFETs verwendet werden sondern beispielsweise Bipolartransistoren, so müssten solche separaten Dioden Verwendung finden.

Weiterhin sind Abgriffe zwischen den Speicherinduktivitäten L1, L3 und L5 und den jeweils zugehörigen Schalttransistoren S1, S2 bzw. S3 über Koppelkondensatoren C2, C4 bzw. C6 kurzgeschlossen. Dieser Hochfrequenzkurzschluss symmetrisiert die Wechselspannungssignale und beugt damit Problemen vor, die wegen der Sekundärspannungsverteilung und kapazitiven Kopplungen auftreten können.

Figur 4 zeigt schließlich ein viertes Ausführungsbeispiel, das dem dritten Ausführungsbeispiel aus Figur 3 mit folgender Ausnahme entspricht: Die Versorgungskondensatoren C11, C12 und C13 der einzelnen Klasse-E-Konvertermodule sind durch einen einheitlichen Versorgungskondensator C21 ersetzt, der parallel zu der gesamten Reihenschaltung liegt. Ein solcher großer Elektrolytkondensator ist im Regelfall kostengünstiger als mehrere kleine.

Eine vorteilhafte Ausführungsform kann auch in einer Kombination der Figuren 3 und 4 dergestalt stehen, dass ein relativ großer gemeinsamer Speicherkondensator C21 zusammen mit relativ kleinen modulindividuellen Speicherkondensatoren C11, C12 und C13 verwendet wird, bei den vorliegenden drei Modulen also insgesamt vier Kondensatoren. Diese Lösung wäre von den Bauteilekosten her noch günstiger als die ausschließlich modulindividuelle Lösung gemäß den Figuren 1-3. Insbesondere können für die modulindividuellen Speicherkondensatoren Folienkondensatoren verwendet werden.

Insgesamt zeigt die Erfindung durch eine einfache modulare Bauweise eine große Flexibilität, indem sich optimierte Klasse-E-Konvertermodule je nach zur Verfügung stehender Versorgungsgleichspannung zusammensetzen lassen. Auch sekundärseitig lassen sich durch geeignete Verschaltung (seriell oder parallel) Anpassungen an die zu versorgende Lampe vornehmen. Die Notwendigkeit eines zwischengeschalteten weiteren Wandlers zur Reduktion des Gleichspannungsniveaus des Ausgangs des Hochsetzstellers entfällt. Stattdessen kann die Wandlerschaltung gemäß Figuren 1-4 direkt am Ausgang des Hochsetzstellers betrieben werden. Schließlich bietet die Aufteilung auf mehrere Speicherinduktivitäten bzw. Transformatoren im Einzelfall auch eine große räumliche Flexibilität, insbesondere eine günstige Bauhöhe.

Die Erfindung eignet sich besonders zur Versorgung von dielektrisch behinderten Entladungslampen beispielsweise für die Monitorhinterleuchtung, und zwar insbesondere bei höheren Lampenleistungen (etwa bei großformatigen Fernsehbildschirmen).

## Patentansprüche

1. Wandlerschaltung mit einer Mehrzahl Klasse-E-Konvertermodule;
deren Schalttransistoren (S1-S4) und Speicherinduktivitäten (L1, L3, L5, L7) insgesamt in Serie geschaltet sind
und deren Schalttransistoren (S1-S4) über ein gemeinsames Steuersignal (SE) ansteuerbar sind.

2. Wandlerschaltung nach Anspruch 1, bei der einzelne Steuerleitungen der jeweiligen Schalttransistoren (S1-S4) der Klasse-E-Konvertermodule über jeweilige Kondensatoren (C7-C10) mit einer gemeinsamen Steuerleitung gekoppelt sind, um das gemeinsame Steuersignal (SE) zu übertragen..

3. Wandlerschaltung nach Anspruch 1 oder 2 mit einer jeweiligen Zenerdiode (Z1-Z4) in jedem Klasse-E-Konvertermodul zwischen einem Steuer- und einem Bezugspotentialanschluss des Schalttransistors (S1-S4) des jeweiligen Moduls.

4. Wandlerschaltung nach einem der vorstehenden Ansprüche, bei der jedes Klasse-E-Konvertermodul einen eigenen Versorgungskondensator (C11-C14) aufweist.

5. Wandlerschaltung nach einem der vorstehenden Ansprüche, bei der die gesamte Serienschaltung der Klasse-E-Konvertermodule einen gemeinsamen Versorgungskondensator (C21) aufweist.

6. Wandlerschaltung nach einem der vorstehenden Ansprüche, bei der in den jeweiligen Klasse-E-Konvertermodulen parallel zu der Schaltstrecke des jeweiligen Schalttransistors (S1-S4) jeweils ein Kondensator (C1, C3, C5) geschaltet ist.

7. Wandlerschaltung nach einem der vorstehenden Ansprüche, bei der jeweilige Abgriffe zwischen dem jeweiligen Schalttransistor (S1-S4) und der jeweiligen Speicherinduktivität (L1, L3, L5, L7) der Klasse-E-Konvertermodule kapazitiv (C2, C4, C6) miteinander kurzgeschlossen sind.

8. Wandlerschaltung nach einem der vorstehenden Ansprüche, bei der die Klasse-E-Konvertermodule jeweils einen Transformator (L1-L8) als Ausgang aufweisen.

9. Elektronisches Vorschaltgerät für eine dielektrisch behinderte Entladungslampe mit einer Waridlerschaltung nach einem der vorstehenden Ansprüche.

10. Elektronisches Vorschaltgerät nach Anspruch 8 mit einer Leistungsfaktorkorrekturschaltung, bei dem die Wandlerschaltung mit der unverminderten Ausgangsspannung der Leistungsfaktorkorrekturschaltung betreibbar ist.

11. Elektronisches Vorschaltgerät nach Anspruch 9, bei der die Leistungsfaktorkorrekturschaltung ein Hochsetzsteller ist.

12. Verfahren zum Betreiben einer Wandlerschaltung nach einem der Ansprüche 1-7, bei dem die Schalttransistoren (S1-S4) über die gemeinsame Steuerleitung (SE) synchron angesteuert werden, die Speicherinduktivitäten (L1, L3, L5, L7) der Klasse-E-Konvertermodule zeitlich synchronisiert laden und entladen werden und am Ausgang der Wandlerschaltung eine gemeinsame Last durch die Klasse-E-Konvertermodule gemeinsam betrieben wird.

13. Verfahren zum Betreiben einer dielektrisch behinderten Entladungslampe mit einem elektronischen Vorschaltgerät nach einem der Ansprüche 9-11, welches ein Verfahren nach Anspruch 12 beinhaltet.

14. Lampensystem mit einem elektronischen Vorschaltgerät nach einem der Ansprüche 9-11 und einer mit dem Vorschaltgerät betreibbaren dielektrisch behinderten Entladungslampe.

15. Verwendung eines Lampensystems nach Anspruch 14 zur Hinterleuchtung in einem Monitor, Fernsehbildschirm oder einer Anzeigevorrichtung, zur Beleuchtung in einer Leuchte oder zur UV-Behandlung in einem technischen UV-Strahler.

16. ;Anzeigevorrichtung, insbesondere Monitor oder Fernsehbildschirm, mit einem Lampensystem nach Anspruch 14 zur Hinterleuchtung.
